# EUROPEAN PATENT SPECIFICATION

(11) **EP 4 387 171 B1**
(45) Date of publication and mention of the grant of the patent: **11.02.2026**
(21) Application number: 22306910.5
(22) Date of filing: 16.12.2022
(51) Int. Cl.: H04L 12/12

(54) **METHOD FOR CARRYING OUT A SEMANTIC COMMUNICATION AND ASSOCIATED SEMANTIC COMMUNICATION SYSTEM**
VERFAHREN ZUR DURCHFÜHRUNG EINER SEMANTISCHEN KOMMUNIKATION UND ZUGEHÖRIGES SEMANTISCHES KOMMUNIKATIONSSYSTEM
PROCÉDÉ DE RÉALISATION D'UNE COMMUNICATION SÉMANTIQUE ET SYSTÈME DE COMMUNICATION SÉMANTIQUE ASSOCIÉ

(43) Date of publication of application: 19.06.2024
(73) Proprietor: Commissariat à l'Energie Atomique et aux Energies Alternatives, 75015 Paris (FR)
(72) Inventor: CALVANESE STRINATI, Emilio, 38054 GRENOBLE CEDEX 9 (FR)
(74) Representative: Lavoix

(56) References cited:
- US-A1- 2003 144 831
- US-A1- 2010 042 401
- US-A1- 2016 041 847

## Description

### FIELD OF THE INVENTION

The present invention concerns a method for carrying out a semantic communication and a semantic communication system associated to such a method.

The invention can have numerous industrial applications which are related to any service that implies the share of knowledge between intelligent agents (natural or artificial intelligence (Al)) using for example a large amount of data. In some cases, the amount of data can be relatively small but using the semantic communication, the receiver can learn how to communicate and how to operate thanks to the exchanged information. The extreme case can comprise sending just few control bits.

An example where a semantic communication can be applied is the cooperative-robots. Another example is a virtual world type applications, where a digital copy is created in a digital twin. With this type of applications, the virtual service provider responsible for creating and rendering the digital twin, is required to use the data collected by (IoT) devices to create the virtual copy of the physical world that implies transmission of a big amount of data.

To solve these challenges, data can be exchanged in form of processable knowledge, thus applying semantic communication principles to minimize the size of the transmitted data over the wireless channels and maximize the effectiveness of the shared information.

### BACKGROUND OF THE INVENTION

According to the Shannon-Weaver model, communication of digital or analogue data can be categorized in three levels: (i) transmission of symbols (the technical problem); (ii) semantic exchange of transmitted symbols (the semantic problem); (iii) effect of semantic information exchange (the effectiveness problem). In the past 70 years, based on the Shannon-Weaver model, communications primarily focused on how to accurately and effectively transmit symbols from the transmitter to the receiver. Today, after having developed the fifth generations (5G) of wireless communication systems and kick-offing research on beyond 5G, groundbreaking solutions are needed to distil data and rethink intelligence transmission exchanges for enabling reliable cognition and task execution at the receiver rather than furthermore gradually approaching to communication limits defined by the Shannon-Weaver model. The assumption that semantics are not relevant in no longer true and should be taken into consideration in the further developments of the communication techniques.

Recently with the growing interdependence between communication systems and Al, new attempts to algorithmically address the semantic communication (also called "SemCom") opportunity have emerged, leveraging on advances in the field of, for example, representation learning, transformer architectures with attention mechanisms. End-to-end (E2E) neural architecture is devised to enable semantic transmission of Natural Language Processing (NLP) based sentences, speech signals transmission, object recognitions (in images and videos). Transformers applicability is today understood to be effective mainly in such fields of applications.

The prior-art works relative to the semantic communication are mainly limited in flexibility. Particularly, according to these works, a fixed number of semantic symbols is transmitted irrespective of the conveyed meaning in the transmitted sequence. They assume that agents interact adopting the same ontology languages and/or using the same logic to represent knowledge. Additionally, the prior-art works on intelligent collaborative inference at the edge, model the communication channel as error-free, assuming that communication protocols perfectly counteract the dynamics and imperfection introduced by the channel and impairments by the hardware. This reduces general efficiency of the semantic communication when it is carried out on practice.

Document US 2016/041847 A1 discloses a method for processing semantic tasks.

### SUMMARY OF THE INVENTION

One of the aims of the invention is to propose a more flexible and efficient semantic communication. Particularly, the semantic communication carried out according to the invention can be adapted by adapting the number of semantic symbols to be transmitted as well as the quality of the communication channel, including both wireless and semantic channels.

For this purpose, the invention concerns a method for carrying out a semantic communication between a sender and a receiver through a wireless channel comprising one or several reconfigurable network nodes, the method comprising the following steps:
- generating semantic symbols to be sent, the semantic symbols being generated by a semantic chain including identifying semantic concepts from observed data and mapping the semantic concepts into semantic symbols;
- determining an impact of the wireless channel on a semantic communication effectiveness from the sender to the receiver;
- based on the determined impact, adapting configuration parameters of the wireless channel and/or the semantic chain.

Provided with these features, both wireless and semantic components of a semantic communication channel are artificially controllable. The wireless channel can be artificially shaped by using reconfigurable network nodes while the semantic chain can be intentionally controlled by adapting the use of semantic extraction (at the sender) and semantic interpretation (at the receiver) rules. This can be for instance also dependable on the semantic channel, having the semantic language at the sender that is adapted to have a better semantic channel quality, thus impacting on the semantic extraction and interpretation rules. The invention proposes thus to adapt the wireless propagation channel with the use of reconfigurable network nodes, to identify more effective (in terms of cost, delays, required resources) operation points for the sematic communication related trade-offs. Semantic communication carried out by the invention can thus be more flexible and efficient.

According to some embodiments, each reconfigurable network node is a reconfigurable intelligent surface (RIS).

According to some embodiments, the semantic symbols are generated further to a change occurring in the sender, said change being related to data observed by the sender and/or semantic concepts used by the sender and/or mappings used by the sender.

According to some embodiments, said impact is determined considering a wireless communication adaptive mechanism comprising adaptation of at least one of the following elements:
- transmission power;
- number of antennas;
- phases of antennas;
- source coding;
- channel coding including coding rate selection;
- modulation order;
- modulation type (PAM, QAM, OAM, etc...);
- communication spectral efficiency.

According to some embodiments, the semantic communication effectiveness is measured using a predetermined metric.

According to some embodiments, the semantic communication effectiveness is determined using a metric combining a wireless link quality metric relative to the wireless channel and a semantic chain quality metric relative to the semantic chain.

According to some embodiments, the semantic communication effectiveness is determined from the corresponding wireless link quality metric using a look up table defined for each set of the configuration parameters of the semantic chain.

According to some embodiments, the semantic communication effectiveness is determined from feedbacks relative to the wireless channel and/or the semantic chain, from one or several receivers.

According to some embodiments, said impact is determined either by the sender, the receiver or a central unit, before transmission of the semantic symbols.

According to some embodiments, said impact is characterized by a multi-level semantic value defined as follows:
- L0 when the semantic communication quality is considered as "good";
- L1 when the semantic communication quality is considered as "not good enough";
- L2 when the semantic communication quality is considered as "too good";
- L3 when the impact is considered as unreliable or cannot be estimated.

According to some embodiments, the step of adapting the configuration parameters further comprises adapting the configuration parameters based on the multi-level semantic value, as follows:
- L0: no modification of the configuration parameters of the wireless channel and the semantic chain;
- L1 or L2: modification of the configuration parameters either of the wireless channel only, the semantic chain only or both.

According to some embodiments, the modification of the configuration parameters of the wireless channel comprises reconfiguration of at least one reconfigurable network node and/or adding of at least one additional reconfigurable network node.

According to some embodiments, when the configuration parameters of both wireless channel and semantic chain are modified, the step of adapting the configuration parameters comprises an iterative process.

According to some embodiments, the iterative process is carried out as follows:
Sub-step 1: starting by modification of the configuration parameters of the wireless channel without reconfiguration of at least one reconfigurable network node or adding of at least one additional reconfigurable network node;
Sub-step 2: determining a wireless link quality metric of the wireless channel with the modified configuration parameters;
Sub-step 3: if the wireless link quality metric is less than a predetermined threshold then modify the configuration parameters of the wireless channel with reconfiguration of at least one reconfigurable network node and/or adding of at least one additional reconfigurable network node, otherwise stop the process;
Sub-step 4: determining the wireless link quality metric of the wireless channel with the modified configuration parameters;
Sub-step 5: if the wireless link quality metric is less than the predetermined threshold then modify the configuration parameters of the semantic chain, otherwise stop the process;
Sub-step 6: determining the wireless link quality metric of the wireless channel with the modified configuration parameters;
Sub-step 7: if the wireless link quality metric is less than the predetermined threshold then go back to Sub-step 1, otherwise stop the process.

According to some embodiments, the iterative process is stopped either after a fixed number of iterations or after full exploration of all sets of the configuration parameters of the semantic chain.

The present invention also concerns a semantic communication system comprising:
- a sender able to generate and send semantic symbols;
- a receiver able to receive the semantic symbols and process them to extract corresponding data;
- a wireless channel comprising one or several reconfigurable network nodes and configured to transmit the semantic symbols in form of radio signals, from the sender to the receiver;
the sender, the receiver and the wireless channel being adapted to carry out the method as defined above.

### BRIEF DESCRIPTION OF THE DRAWINGS

The invention and its advantages will be better understood upon reading the following description, which is given solely by way of non-limiting example and which is made with reference to the appended drawings, in which:
- Figure 1 is a schematic view of a semantic communication system according to the invention;
- Figure 2 is a semantic chain used to generate semantic symbols in a sender of the semantic communication system of Figure 1;
- Figure 3 is a diagram of a method for carrying out a semantic communication by the semantic communication system of Figure 1; and
- Figure 4 is a diagram of an iterative process carried out by the method of Figure 3.

### DETAILED DESCRIPTION OF THE INVENTION

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

As used herein, the term **"semantic communication"** or **"SemCom"** refers to a type of communication of digital data involving transmission semantic symbols between a sender and a receiver. Particularly, according to one definition given in the art, a semantic communication is a communication framework which is involved in the Level B of the 3-levels communication problems introduced by WEAVER, W. The Mathematical Theory of Communication. 1949, ch. Recent Contributions to the Mathematical Theory of Communication*.* This Level B relates to the semantic problem of accurately reproducing the desired meanings of symbols. Thus, in a semantic communication system meanings of transmitted codewords over a noisy channel are explicitly taken into account at the receiver and where the target is not the error-free bit-fidelity decoding of the received messages but rather their correct interpretation by the receiver.

As used herein, the term **"reconfigurable intelligent surfaces" or "RIS"** refers to artificial surfaces made of several (for example several hundreds) of nearly passive (sometimes, also active) reflective elements that can be programmed and controlled to realize dynamic transformations of the wireless propagation environment, both in indoor and outdoor scenarios. Thus, RIS-based communications enable a fully flexible and dynamic network reconfiguration.

As used herein, the term **"boosted area"** refers to a portion of space in which network performance indicators (e.g. data rate, latency, reliability, secrecy, etc.) are enhanced through the aid of one or more RISs.

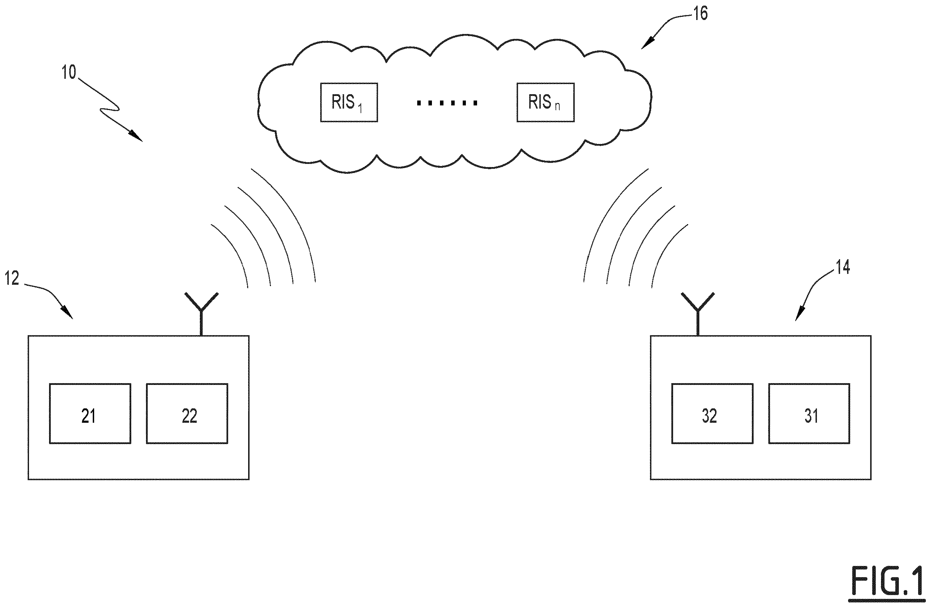

Figure 1 shows a semantic communication system 10 according to the invention. This communication system 10 comprises at least a sender 12, a receiver 14 and a wireless channel 16 connecting the sender 12 and the receiver 14. In the example of Figure 1, only one sender 12, one receiver 14 and one wireless channel 16 are shown. However, those skilled in art would understand that in a general case, any number of senders and receivers as well as wireless channels connecting these senders and these receivers, is possible. Additionally, the or each sender 12 can also be a receiver and the or each receiver 14 can also be a sender, depending on the communication direction carried out between these entities. In the further description, the case of only one sender 12 and only one receiver 14 will be explained in further detail.

The sender 12 is able to generate and send semantic symbols to the receiver 14 via the wireless channel 16. Particularly, the sender 12 can also be referred as a "teacher" since it shares processed version of observed data to assist the receiver 14 (or "learner") to operate an inference task or to extract selected information. The sender 12 comprises a semantic chain 21 able to generate semantic symbols from observed data and a physical layer 22 able to transform these semantic symbols into radiofrequency signals to be transmitted via the wireless channel 16. For this purpose, the physical layer 22 can comprise an encoder, a modulator, a waveform transformer, etc. These means are known *per se* and will not be explained in further detail. For example, the encoder can encode semantically mapped/modulated symbols with any physical layer encoders (such as polar codes, LDPC, turbo codes, etc...).

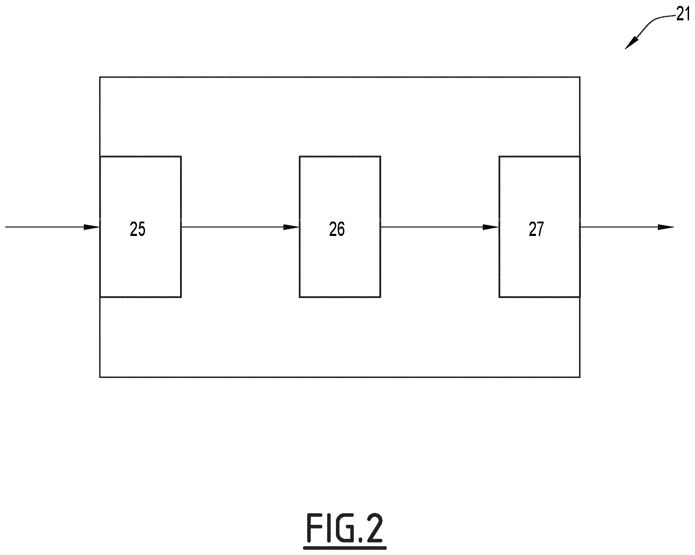

Figure 2 shows in further detail the semantic chain 21 of the sender 12. In reference to this Figure, the semantic chain 21 comprises an application source input 25, a semantic extractor 26 and a semantic modulator 27. The application source input 25 is able to acquire observed data which can for example be communicated to the application source input 25 by one or several sensors (cameras, microphones, thermal sensors, radar, etc.) and/or by an external source. The external source can for example be linked wirelessly to the sender 12. The semantic extractor 26 is able to process the observed data to extract from it semantic concepts. The semantic concepts can for example be selected depending on the targeted semantic compression and resulting communication (wireless channel plus semantic communication) concepts, as it will be explained in further detail below. For this purpose, the semantic extractor 26 can for example use a neural network attention mechanism. The semantic modulator 27 is able to map the semantic concepts extracted by the semantic extractor 26 into sematic symbols. Depending on the target complexity, the semantic modulator 27 can for example determine the average number of semantic symbols required to represent a semantic message. It should be noted that different semantic symbols can be in principle represented with a different number of bits that then are physically transmitted over the wireless channel 16.

The semantic extraction performed by the semantic extractor 26 and the semantic mapping performed by the semantic modulator 27 are carried out using configuration parameters defined for the extractor 26 and the modulator 27. Each couple of such configuration parameters forms a sematic communication mode SC^{mode}ⱼ.

The receiver 14 is able to receive the semantic symbols transmitted by the sender 12 over the wireless channel 16 and process them to extract corresponding data. This data can correspond to semantic information and/or allow the receiver 14 to operate an inference or to generate/update a neural network model. The receiver 14 is thus also called "learner". The receiver 14 can present a mobile terminal (such as a smartphone, mobile Edge host, etc.) or an loT device (such as a sensor, industrial loT system, etc.). Referring again to Figure 1, similarly to the sender 12, the receiver 14 comprises a semantic chain 31 and a physical layer 32. The physical layer 32 is able to transform radiofrequency signals received from the wireless channel 16 into semantic symbols. Its structure is similar to the structure of the physical layer 22 described in relation with the sender 12. The semantic chain 31 can also be similar to the semantic chain 21 of the sender 12 as previously described. The semantic chain 31 can be configured to operate symmetrically to the semantic chain 21. Particularly, it can for example extract observed data from the semantic symbols transmitted by the sender 12 or process these semantic symbols in any other way, depending notably on the nature of the receiver 14.

The wireless channel 16 comprises any conventional mean (such as different kinds of antennas, modulators, etc.) carrying out wireless transmission using radiofrequency signals. Additionally, the wireless channel 16 comprises one or more reconfigurable network nodes configured to carry out at least partially the wireless communication channel. In the following description, it is considered that each reconfigurable network node is a reconfigurable intelligence surface (RIS). However, in a general case, at least one reconfigurable network node can operate using RELAYS or MIMO techniques. In the example of Figure 1, n RISs are shown (RIS₁, ..., RISₙ). The operation of the wireless channel 16 is determined by a plurality of configuration parameters relative to the operation of the different components forming the channel 16. Each plurality of configuration parameters used to operate the different components of the wireless channel 16 forms a wireless communication mode WC^{mode}ⱼ for this channel.

In some embodiments, the semantic communication system 10 may further includes a central unit. This central unit may be configured to supervise the operation of the sender 12, the receiver 14 and/or the wireless channel 16.

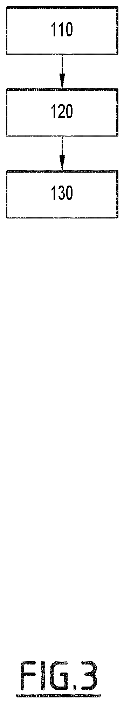

A method for carrying out a semantic communication between the sender 12 and the receiver 14 will now be explained in reference to Figure 3 presenting a diagram of its steps.

During an initial step 110 of the method, the semantic chain 21 of the sender 12 generates semantic symbols to be sent. Particularly, the semantic symbols are generated further to a change occurring in the sender 12. This change is for example related to data observed by the sender 12 (for example new data available or changes occurred in the existed data) and/or semantic concepts used by the sender 12 (for example new semantic extraction policies generating new concepts) and/or mapping concepts used by the sender 12 (new concept to symbol mapping strategies such as a difference in the number of symbol per concept adopted).

During the next step 120, the sender 12 determines an impact of the wireless channel 16 on a semantic communication effectiveness from the sender 12 to the receiver 14. As it will be explained in further detail below, this determination can include determination of the effect of a wireless communication adaptive mechanism. This mechanism comprises adaptation of at least one of the following elements, relative for example to the sender and/or one or several RISs and/or receiver:
- transmission power;
- number of antennas;
- phases of antennas;
- source coding;
- channel coding including coding rate selection;
- modulation order;
- modulation type (PAM, QAM, OAM, etc...);
- communication spectral efficiency;
- any other possible element.

The impact can be determined either by the sender 12, the receiver 14 or the central unit as defined above, before transmission of the semantic symbols.

The semantic communication effectiveness is measured using a predetermined metric such as a metric indicating for instance semantic compression gain, semantic robustness gain, energy efficiency, low electromagnetic fields radiation generation, etc., or any composition of ratios between such metrics. Advantageously, the metric used to measure the semantic communication effectiveness combines a wireless link quality metric (denoted LQMw) relative to the wireless channel 16 and a semantic chain quality metric relative to the semantic chain 21.

The wireless link quality metric can correspond for example to signal to noise ratio (SNR) that can be measured or estimated from channel state information feedbacks relative to the wireless channel 16, from one or several receivers 14.

According to one embodiment, the semantic communication effectiveness can be determined from a look up table relating the wireless link quality metric (LQMw) and semantic communication effectiveness for different semantic communication modes SC^{mode}ⱼ. According to another embodiment, the semantic communication effectiveness is determined from feedbacks relative to both wireless channel 16 and semantic chain 21. These feedbacks can be transmitted by one or several receivers 14 and/or the central unit.

According to still another embodiment, the sender 12 estimates the wireless channel quality classically through the use of link quality metrics (LQMw) feedbacked from the receiver 14, from channel state information (statistical and/or dynamic) on the wireless propagation environment, etc. For determining the semantic communication effectiveness, a mapping between the discrete set of possible known wireless channel modes (WC^{mode}ⱼ) and the actual wireless link quality metric LQMw is performed. For instance in classical adaptive modulation and coding (AMC) techniques, the estimation of SNR identifies the possible AMC transmission modes (ex. mode 1 = BPSK rate ¾, mode 5 = 16-QUAM rate ½, etc.). According to other embodiments, the same operations are performed either by the receiver 14 or the central unit.

At the end of step 120, the impact is determined by a multi-level semantic value which is defined as follows:
- L0 when the semantic communication quality is considered as "good";
- L1 when the semantic communication quality is considered as "not good enough";
- L2 when the semantic communication quality is considered as "too good";
- L3 when the impact is considered as unreliable or cannot be estimated.

This value can be determined by comparing the semantic communication effectiveness with appropriate thresholds corresponding to each of the levels and determined in the corresponding metric.

During the next step 130, the configuration parameters of the wireless channel 16 and/or the semantic chain 21 are adapted based on the determined impact. Particularly, these configuration parameters are adapted based on the multi-level semantic value as previously defined.

Particularly, if the semantic communication quality is considered as "good" (L0 value), no modification of the configuration parameters of the wireless channel 16 and the semantic chain 21 is performed. This means that semantic extraction/mapping and inverse function at the semantic chain 21 are unchanged from previous communication attempts. The wireless channel 16 is also operated following rules from previous communication attempts.

If the impact is considered as unreliable or cannot be estimated (value L3), adaptation of the related metrics is required. This can include for instance in case of unreliable availability of LQMw and/or of best SC^{mode}ⱼ mode for semantic transmission. Classical safety margin techniques can be adopted, thus pushing adaptation strategies for a more robust selection of the set of adapted parameters.

If the semantic communication quality is considered as "not good enough" or "too good" (value L1 or L2), the configuration parameters either of the wireless channel only, the semantic channel only or both are modified.

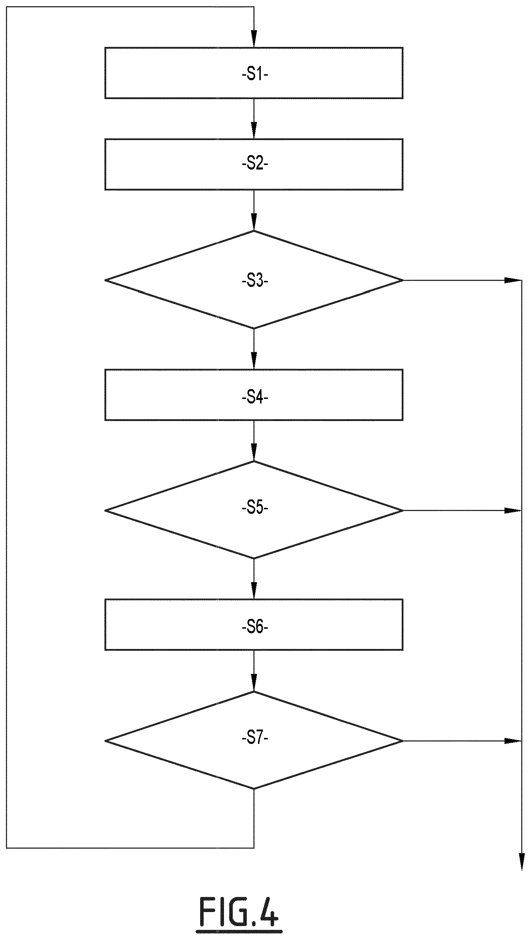

Particularly, when the semantic communication quality is considered as "not good enough" (value L1), the actual wireless channel and the adaptive mechanism configuration have to be improved and/or the semantic strategy is not robust enough given the actual semantic chain 21 and wireless channel 16. In this case, several embodiments are possible:
**Embodiment L1-a:** adaptation is done only at the semantic chain 21 level only. This can include re-computing the operational point/region for the semantic trade-off (for instance robustness versus compression or energy efficiency versus robustness), thus re-parametrizing the semantic communication chain 21. In other words, this embodiment includes modification of the configuration parameters of the semantic chain 21. This can include modifying its mode SC^{mode}ⱼ.
**Embodiment** L1-b: adaptation is done at the wireless channel 16 level only. This can include re-computing the operational point/region for the wireless trade-off (for instance robustness versus compression or energy efficiency versus robustness), thus re-parametrizing the wireless channel 16. In other words, this embodiment includes modification of the configuration parameters of the wireless channel 16 without reconfiguration of at least one RIS or adding of at least one additional RIS.
**Embodiment** L1-c: adaptation is done at the wireless channel 16 level only including artificially controlling the wireless propagation channel by adapting the wireless channel 16 with the reconfiguration (phase shifts for instance, reflective beams direction, etc.) and/or the use of additional RISs. Thus, this includes re-computing the operational point/region for the wireless trade-offs which rule the adopted AMC strategies, thus re-parametrizing the wireless channel 16. Additionally, in this case, alternative AMC strategies can be adopted, for instance including safety margins in the selection of AMC mode WC^{mode}ⱼ given LQMw.
In other words, this embodiment includes modification of the configuration parameters of the wireless channel 16 with reconfiguration of at least one RIS and/or adding of at least one additional RIS.
**Embodiment** L1-d: joint semantic chain 21 and wireless channel 16 adaptation. This artificially control both the wireless channel 16 and the semantic chain 21. As a possible embodiment, an iterative process can be implemented in this case. This iterative process is explained below in reference to Figure 4.

Thus, as it is shown in Figure 4, the iterative process comprises a sub-step 1 (denoted as S1) wherein the same operations as those disclosed in Embodiment L1-b are performed. The iterative process further comprises a sub-step 2 (denoted as S2) comprising determining a LQMw of the wireless channel 16 with the modified configuration parameters. The iterative process further comprises a sub-step 3 (denoted as S3) comprising comparison of the LQMw with a predetermined threshold. If the LQMw is less than the threshold, the same operations as those explained in relation with Embodiment L1-c are performed. Otherwise, the process is stopped. The iterative process further comprises a sub-step 4 (denoted S4) comprising determining a LQMw of the wireless channel 16 with the modified configuration parameters. The iterative process further comprises a sub-step 5 (denoted as S5) comprising comparison of the LQMw with the predetermined threshold. If the LQMw is less than the threshold, the same operations as those explained in relation with Embodiment L1-a are performed. The iterative process further comprises a sub-step 6 (denoted S6) comprising determining a LQMw of the wireless channel 16 with the modified configuration parameters. Finally, the iterative process further comprises a sub-step 7 (denoted S7) comprising comparison of the LQMw with the predetermined threshold. If the LQMw is less than the threshold, then the sub-step 1 is carried out again. Otherwise, the process is stopped.

The iterative process can either stop after a fixed number of iterations, or after full exploration of all possible modes SC^{mode}ⱼ, or given a stopping criteria that can be set. It can for instance be set when the maximum total energy consumption for the communication is reached. Of course, other examples are possible.

Moreover, the predetermined threshold used in the iterative process can be learned from previous transmissions or estimated from specific geometry of the communication environment (for example the sender to receiver distance).

Finally, when the semantic communication quality is considered as "too good" (value L2), the actual wireless channel and the adaptive mechanism configuration exceed the needs for successful semantic communication. The actual SNR value may be higher than the corresponding threshold. In this case, same embodiments as for Embodiment L1-a to Embodiment L1-d strategies can be followed but with the inverse approach. Instead of increasing the quality of the wireless and/or semantic transmission setting, it is reduced. This means that at the semantic level, it is possible to compress more for instance and/or a many-to-one semantic symbol representation may be used, and/or it is possible to reduce a less robust communication configuration at the wireless channel and/or it is possible to reduce the support of RISs.

## Claims

1. A method for carrying out a semantic communication between a sender (12) and a receiver (14) through a wireless channel (16) comprising one or several reconfigurable network nodes, the method comprising the following steps:
- generating (110) semantic symbols to be sent, the semantic symbols being generated by a semantic chain (21) including identifying semantic concepts from observed data and mapping the semantic concepts into semantic symbols;
- determining (120) an impact of the wireless channel (16) on a semantic communication effectiveness from the sender (12) to the receiver (14);
- based on the determined impact, adapting (130) configuration parameters of the wireless channel (16) and/or the semantic chain (21).

2. The method according to claim 1, wherein the semantic symbols are generated further to a change occurring in the sender (12), said change being related to data observed by the sender (12) and/or semantic concepts used by the sender (12) and/or mappings used by the sender (12).

3. The method according to claim 1 or 2, wherein said impact is determined considering a wireless communication adaptive mechanism comprising adaptation of at least one of the following elements:
- transmission power;
- number of antennas;
- phases of antennas;
- source coding;
- channel coding including coding rate selection;
- modulation order;
- modulation type (PAM, QAM, OAM, etc...);
- communication spectral efficiency.

4. The method according to any one of the preceding claims, wherein the semantic communication effectiveness is measured using a predetermined metric.

5. The method according to any one of the preceding claims, wherein the semantic communication effectiveness is determined using a metric combining a wireless link quality metric relative to the wireless channel (16) and a semantic chain quality metric relative to the semantic chain (21).

6. The method according to claim 5, wherein the semantic communication effectiveness is determined from the corresponding wireless link quality metric using a look up table defined for each set of the configuration parameters of the semantic chain (21).

7. The method according to claim 5 or 6, wherein the semantic communication effectiveness is determined from feedbacks relative to the wireless channel (16) and/or the semantic chain (21), from one or several receivers (14).

8. The method according to any one of the preceding claims, wherein said impact is determined either by the sender (12), the receiver (14) or a central unit, before transmission of the semantic symbols.

9. The method according to any one of the preceding claims, wherein said impact is **characterized by** a multi-level semantic value defined as follows:
- L0 when the semantic communication quality is considered as "good";
- L1 when the semantic communication quality is considered as "not good enough";
- L2 when the semantic communication quality is considered as "too good";
- L3 when the impact is considered as unreliable or cannot be estimated.

10. The method according to claim 9, wherein the step (130) of adapting the configuration parameters further comprises adapting the configuration parameters based on the multi-level semantic value, as follows:
- L0: no modification of the configuration parameters of the wireless channel (16) and the semantic chain (21);
- L1 or L2: modification of the configuration parameters either of the wireless channel (16) only, the semantic chain (21) only or both.

11. The method according to claim 10, wherein the modification of the configuration parameters of the wireless channel (16) comprises reconfiguration of at least one reconfigurable network node and/or adding of at least one additional reconfigurable network node.

12. The method according to claim 10 or 11, wherein when the configuration parameters of both wireless channel (16) and semantic chain (21) are modified, the step (130) of adapting the configuration parameters comprises an iterative process.

13. The method according to claim 12, wherein the iterative process is carried out as follows:
Sub-step 1: starting by modification of the configuration parameters of the wireless channel (16) without reconfiguration of at least one reconfigurable network node or adding of at least one additional reconfigurable network node;
Sub-step 2: determining a wireless link quality metric of the wireless channel (16) with the modified configuration parameters;
Sub-step 3: if the wireless link quality metric is less than a predetermined threshold then modify the configuration parameters of the wireless channel (16) with reconfiguration of at least one reconfigurable network node and/or adding of at least one additional reconfigurable network node, otherwise stop the process;
Sub-step 4: determining the wireless link quality metric of the wireless channel (16) with the modified configuration parameters;
Sub-step 5: if the wireless link quality metric is less than the predetermined threshold then modify the configuration parameters of the semantic chain (21), otherwise stop the process;
Sub-step 6: determining the wireless link quality metric of the wireless channel (16) with the modified configuration parameters;
Sub-step 7: if the wireless link quality metric is less than the predetermined threshold then go back to Sub-step 1, otherwise stop the process.

14. The method according to claim 13, wherein the iterative process is stopped either after a fixed number of iterations or after full exploration of all sets of the configuration parameters of the semantic chain (21).

15. A semantic communication system (10) comprising:
- a sender (12) able to generate and send semantic symbols;
- a receiver (14) able to receive the semantic symbols and process them to extract corresponding data;
- a wireless channel (16) comprising one or several reconfigurable network node and configured to transmit the semantic symbols in form of radio signals, from the sender (12) to the receiver (14);
the sender (12), the receiver (14) and the wireless channel (16) being adapted to carry out the method according to any one of claims 1 to 14.

## Patentansprüche

1. Verfahren zum Durchführen einer semantischen Kommunikation zwischen einem Sender (12) und einem Empfänger (14) über einen drahtlosen Kanal (16), umfassend einen oder mehrere rekonfigurierbare Netzknoten, das Verfahren umfassend die folgenden Schritte:
- Erzeugen (110) zu sendender semantischer Symbole, wobei die semantischen Symbole durch eine semantische Kette (21) erzeugt werden, die ein Identifizieren semantischer Konzepte aus beobachteten Daten und ein Mapping der semantischen Konzepte in semantische Symbole umfasst;
- Bestimmen (120) einer Auswirkung des drahtlosen Kanals (16) auf eine semantische Kommunikationseffektivität von dem Sender (12) zu dem Empfänger (14);
- basierend auf der bestimmten Auswirkung, Anpassen (130) der Konfigurationsparameter des drahtlosen Kanals (16) und/oder der semantischen Kette (21).

2. Verfahren nach Anspruch 1, wobei die semantischen Symbole nach einer Änderung erzeugt werden, die in dem Sender (12) auftritt, wobei die Änderung mit Daten, die von dem Sender (12) beobachtet werden, und/oder semantischen Konzepten, die von dem Sender (12) verwendet werden, und/oder Mappings, die von dem Sender (12) verwendet werden, zusammenhängt.

3. Verfahren nach Anspruch 1 oder 2, wobei die Auswirkung unter Berücksichtigung eines adaptiven Mechanismus für drahtlose Kommunikation bestimmt wird, umfassend eine Anpassung von mindestens einem der folgenden Elemente:
- Übertragungsleistung;
- Anzahl an Antennen;
- Phasen von Antennen;
- Quellkodierung;
- Kanalkodierung einschließlich Kodierraten-Auswahl;
- Modulationsreihenfolge;
- Modulationsart (PAM, QAM, OAM usw.);
- Spektrale Kommunikationseffizienz.

4. Verfahren nach einem der vorherigen Ansprüche, wobei die semantische Kommunikationseffektivität unter Verwendung einer vorbestimmten Metrik gemessen wird.

5. Verfahren nach einem der vorherigen Ansprüche, wobei die semantische Kommunikationseffektivität unter Verwendung einer Metrik bestimmt wird, die eine Qualitätsmetrik der drahtlosen Verbindung in Bezug auf den drahtlosen Kanal (16) und eine Qualitätsmetrik der semantischen Kette in Bezug auf die semantische Kette (21) kombiniert.

6. Verfahren nach Anspruch 5, wobei die semantische Kommunikationseffektivität anhand der entsprechenden Qualitätsmetrik der drahtlosen Verbindung unter Verwendung einer Nachschlagtabelle bestimmt wird, die für jeden Satz der Konfigurationsparameter der semantischen Kette (21) definiert ist.

7. Verfahren nach Anspruch 5 oder 6, wobei die semantische Kommunikationseffektivität anhand Rückmeldungen in Bezug auf den drahtlosen Kanal (16) und/oder die semantische Kette (21) von einem oder mehreren Empfängern (14) bestimmt wird.

8. Verfahren nach einem der vorherigen Ansprüche, wobei die Auswirkung entweder durch den Sender (12), den Empfänger (14) oder eine Zentraleinheit vor Übertragung der semantischen Symbole bestimmt wird.

9. Verfahren nach einem der vorherigen Ansprüche, wobei die Auswirkung durch einen mehrstufigen semantischen Wert gekennzeichnet ist, der wie folgt definiert ist:
- L0 wenn die semantische Kommunikationsqualität als "gut" erachtet wird;
- L1 wenn die semantische Kommunikationsqualität als "nicht gut genug" erachtet wird;
- L2 wenn die semantische Kommunikationsqualität als "zu gut" erachtet wird;
- L3 wenn die Auswirkung als unzuverlässig erachtet oder nicht geschätzt werden können.

10. Verfahren nach Anspruch 9, wobei der Schritt (130) eines Anpassens der Konfigurationsparameter ferner ein Anpassen der Konfigurationsparameter basierend auf dem mehrstufigen semantischen Wert wie folgt umfasst:
- L0: keine Änderung der Konfigurationsparameter des drahtlosen Kanals (16) und der semantischen Kette (21);
- L1 oder L2: Änderung der Konfigurationsparameter entweder nur des drahtlosen Kanals (16), nur der semantischen Kette (21) oder beider.

11. Verfahren nach Anspruch 10, wobei die Änderung der Konfigurationsparameter des drahtlosen Kanals (16) eine Rekonfiguration mindestens eines rekonfigurierbaren Netzknotens und/oder ein Hinzufügen mindestens eines zusätzlichen rekonfigurierbaren Netzknotens umfasst.

12. Verfahren nach Anspruch 10 oder 11, wobei, wenn die Konfigurationsparameter sowohl des drahtlosen Kanals (16) als auch der semantischen Kette (21) modifiziert werden, der Schritt (130) eines Anpassens der Konfigurationsparameter einen iterativen Vorgang umfasst.

13. Verfahren nach Anspruch 12, wobei der iterative Vorgang wie folgt durchgeführt wird:
Teilschritt 1: Beginnen durch Änderung der Konfigurationsparameter des drahtlosen Kanals (16) ohne Rekonfiguration mindestens eines rekonfigurierbaren Netzknotens oder Hinzufügen mindestens eines zusätzlichen rekonfigurierbaren Netzknotens;
Teilschritt 2: Bestimmen einer Qualitätsmetrik der drahtlosen Verbindung des drahtlosen Kanals (16) mit den geänderten Konfigurationsparametern;
Teilschritt 3: wenn die Qualitätsmetrik der drahtlosen Verbindung unter einem vorbestimmten Schwellenwert ist, dann Ändern der Konfigurationsparameter des drahtlosen Kanals (16) durch Rekonfiguration mindestens eines rekonfigurierbaren Netzknotens und/oder Hinzufügen mindestens eines zusätzlichen rekonfigurierbaren Netzknotens; sonst Anhalten des Vorgangs;
Teilschritt 4: Bestimmen der Qualitätsmetrik der drahtlosen Verbindung des drahtlosen Kanals (16) mit den geänderten Konfigurationsparametern;
Teilschritt 5: wenn die Qualitätsmetrik der drahtlosen Verbindung unter dem vorbestimmten Schwellenwert ist, dann Ändern der Konfigurationsparameter der semantischen Kette (21), sonst Anhalten des Vorgangs;
Teilschritt 6: Bestimmen der Qualitätsmetrik der drahtlosen Verbindung des drahtlosen Kanals (16) mit den geänderten Konfigurationsparametern;
Teilschritt 7: wenn die Qualitätsmetrik der drahtlosen Verbindung unter dem vorbestimmten Schwellenwert ist, Zurückkehren zu Teilschritt 1, sonst Anhalten des Vorgangs.

14. Verfahren nach Anspruch 13, wobei der iterative Vorgang entweder nach einer festen Anzahl von Iterationen oder nach vollständiger Erkundung aller Sätze von Konfigurationsparametern der semantischen Kette (21) angehalten wird.

15. Semantisches Kommunikationssystem (10), umfassend:
- einen Absender (12), der in der Lage ist, semantische Symbole zu erzeugen und zu senden;
- einen Empfänger (14), der in der Lage ist, die semantischen Symbole zu empfangen und diese zu verarbeiten, um entsprechende Daten zu extrahieren;
- einen drahtlosen Kanal (16), umfassend einen oder mehrere rekonfigurierbare Netzknoten und der konfiguriert ist, um die semantischen Symbole in Form von Funksignalen von dem Sender (12) zu dem Empfänger (14) zu übertragen;
wobei der Sender (12), der Empfänger (14) und der drahtlose Kanal (16) angepasst sind, um das Verfahren nach einem der Ansprüche 1 bis 14 durchzuführen.

## Revendications

1. Procédé de réalisation d'une communication sémantique entre un émetteur (12) et un récepteur (14) par l'intermédiaire d'un canal sans fil (16) comprenant un ou plusieurs nœuds de réseau reconfigurables, le procédé comprenant les étapes suivantes :
- la génération (110) de symboles sémantiques à envoyer, les symboles sémantiques étant générés par une chaîne sémantique (21) comprenant l'identification de concepts sémantiques à partir de données observées et la mise en correspondance des concepts sémantiques avec des symboles sémantiques ;
- la détermination (120) d'un impact du canal sans fil (16) sur l'efficacité de la communication sémantique entre l'émetteur (12) et le récepteur (14) ;
- sur la base de l'impact déterminé, l'adaptation (130) des paramètres de configuration du canal sans fil (16) et/ou de la chaîne sémantique (21).

2. Procédé selon la revendication 1, dans lequel les symboles sémantiques sont générés à la suite d'un changement survenant dans l'émetteur (12), ledit changement étant lié aux données observées par l'émetteur (12) et/ou aux concepts sémantiques utilisés par l'émetteur (12) et/ou aux mappages utilisés par l'émetteur (12).

3. Procédé selon la revendication 1 ou 2, dans lequel ledit impact est déterminé en tenant compte d'un mécanisme adaptatif de communication sans fil comprenant l'adaptation d'au moins l'un des éléments suivants :
- la puissance de transmission ;
- le nombre d'antennes ;
- les phases des antennes ;
- le codage à la source ;
- le codage des canaux, y compris la sélection du taux de codage ;
- l'ordre de modulation ;
- le type de modulation (PAM, QAM, OAM, etc.) ;
- l'efficacité spectrale des communications.

4. Procédé selon l'une quelconque des revendications précédentes, dans lequel l'efficacité de la communication sémantique est mesurée à l'aide d'une mesure prédéterminée.

5. Procédé selon l'une quelconque des revendications précédentes, dans lequel l'efficacité de la communication sémantique est déterminée à l'aide d'une mesure combinant une mesure de qualité de liaison sans fil relative au canal sans fil (16) et une mesure de qualité de chaîne sémantique relative à la chaîne sémantique (21).

6. Procédé selon la revendication 5, dans lequel l'efficacité de la communication sémantique est déterminée à partir de la mesure de la qualité de la liaison sans fil correspondante à l'aide d'une table de recherche définie pour chaque ensemble de paramètres de configuration de la chaîne sémantique (21).

7. Procédé selon la revendication 5 ou 6, dans lequel l'efficacité de la communication sémantique est déterminée à partir des commentaires relatifs au canal sans fil (16) et/ou à la chaîne sémantique (21), provenant d'un ou de plusieurs récepteurs (14).

8. Procédé selon l'une quelconque des revendications précédentes, dans lequel l'impact est déterminé soit par l'émetteur (12), soit par le récepteur (14), soit par une unité centrale, avant la transmission des symboles sémantiques.

9. Procédé selon l'une quelconque des revendications précédentes, dans lequel l'impact est **caractérisé par** une valeur sémantique à plusieurs niveaux définie comme suit :
- L0 lorsque la qualité de la communication sémantique est considérée comme « bonne » ;
- L1 lorsque la qualité de la communication sémantique est considéréecomme « pas assez bonne » ;
- L2 lorsque la qualité de la communication sémantique est considéréecomme « trop bonne » ;
- L3 lorsque l'impact est considéré comme non fiable ou ne peut pas être estimé.

10. Procédé selon la revendication 9, dans lequel l'étape (130) d'adaptation des paramètres de configuration comprend en outre l'adaptation des paramètres de configuration sur la base de la valeur sémantique multiniveau, comme suit :
- L0 : aucune modification des paramètres de configuration du canal sans fil (16) et de la chaîne sémantique (21) ;
- L1 ou L2 : modification des paramètres de configuration soit du canal sans fil (16) uniquement, soit de la chaîne sémantique (21) uniquement, soit des deux.

11. Procédé selon la revendication 10, dans lequel la modification des paramètres de configuration du canal sans fil (16) comprend la reconfiguration d'au moins un nœud de réseau reconfigurable et/ou l'ajout d'au moins un nœud de réseau reconfigurable supplémentaire.

12. Procédé selon la revendication 10 ou 11, dans lequel, lorsque les paramètres de configuration du canal sans fil (16) et de la chaîne sémantique (21) sont modifiés, l'étape (130) d'adaptation des paramètres de configuration comprend un processus itératif.

13. Procédé selon la revendication 12, dans lequel le processus itératif se déroule comme suit :
Sous-étape 1 : modification des paramètres de configuration du canal sans fil (16) sans reconfiguration d'au moins un nœud de réseau reconfigurable ou ajout d'au moins un nœud de réseau reconfigurable supplémentaire ;
Sous-étape 2 : détermination d'une mesure de la qualité de la liaison sans fil du canal sans fil (16) avec les paramètres de configuration modifiés ;
Sous-étape 3 : si la mesure de la qualité de la liaison sans fil est inférieure à un seuil prédéterminé, modification des paramètres de configuration du canal sans fil (16) en reconfigurant au moins un nœud de réseau reconfigurable et/ou en ajoutant au moins un nœud de réseau reconfigurable supplémentaire, sinon arrêter le processus ;
Sous-étape 4 : détermination de la mesure de la qualité de la liaison sans fil du canal sans fil (16) avec les paramètres de configuration modifiés ;
Sous-étape 5 : si la mesure de la qualité de la liaison sans fil est inférieure au seuil prédéterminé, modification des paramètres de configuration de la chaîne sémantique (21), sinon arrêter le processus ;
Sous-étape 6 : détermination de la mesure de la qualité de la liaison sans fil du canal sans fil (16) avec les paramètres de configuration modifiés ;
Sous-étape 7 : si la mesure de la qualité de la liaison sans fil est inférieure au seuil prédéterminé, on revient à la sous-étape 1, sinon arrêter le processus.

14. Procédé selon la revendication 13, dans lequel le processus itératif est arrêté soit après un nombre fixe d'itérations, soit après l'exploration complète de tous les ensembles de paramètres de configuration de la chaîne sémantique (21).

15. Système de communication sémantique (10) comprenant :
- un émetteur (12) capable de générer et d'envoyer des symboles sémantiques ;
- un récepteur (14) capable de recevoir les symboles sémantiques et de les traiter pour en extraire les données correspondantes ;
- un canal sans fil (16) comprenant un ou plusieurs nœuds de réseau reconfigurables et configuré pour transmettre les symboles sémantiques sous forme de signaux radio, de l'émetteur (12) au récepteur (14) ;
l'émetteur (12), le récepteur (14) et le canal sans fil (16) étant adaptés pour mettre en œuvre le procédé selon l'une quelconque des revendications 1 à 14.
